# EUROPÄISCHE PATENTANMELDUNG

(11) **EP 1 325 971 A2**
(43) Veröffentlichungstag der Anmeldung: **09.07.2003**
(21) Anmeldenummer: 03001686.9
(22) Anmeldetag: 17.08.1999
(51) Int. Cl.: C23C 28/00, C25D 5/48

(54) **Beschichtungssystem**

(30) Priorität: 18.08.1998 DE 19837286; 17.08.1999 DE 19938575
(62) Teilanmeldung aus: 99941633.2
(71) Anmelder: Walter Hillebrand GmbH & Co., 58739 Wickede/Ruhr (DE); Altenloh, Brinck & Co., D-5828 Ennepetal 1 (DE); Te Strake BV, 5753 RP Deurne (NL)
(72) Erfinder: Hillebrand, Ernst-Walter, 58739 Wickede/Ruhr (DE); Hofschneider, Manfred, 42349 Wuppertal (DE); Tomaszewski, Jürgen, 40764 Langenfeld (DE); Kraaijenbrink, Roel, HH Waalre (NL)
(74) Vertreter: König, Gregor Sebastian, Dipl.-Biol.

(57) **Zusammenfassung**

Die Erfindung betrifft ein Beschichtungssystem zur Schmierstoffbeschichtung von Bauteilen mit einer galvanisch aufgebrachten oxidativ vorbehandelten Zink/Nickel-Schicht und einer Trockenschmierstoffschicht, bei der erheblich verbesserte Haftungseigenschaften, Korrosionsbeständigkeit und eine höhere Chemikalienbeständigkeit erreicht werden.

## Beschreibung

Die Erfindung betrifft ein Beschichtungssystem zur Beschichtung von Bauteilen mit einem insbesondere für Befestigungselemente für Räder und Rollen.

Zur Verbesserung der Gleiteigenschaften von Oberflächen bzw. zur Verringerung der Oberflächenrauheit ist der Einsatz von Trockenschmierstoffen als sogenanntes anti-friction-coating bekannt. Hierbei werden beispielsweise PTFE- oder graphithaltige Beschichtungssysteme eingesetzt. Ebenso ist es bekannt Systeme auf MoS₂-Basis einzusetzen.

Ferner ist es bekannt, die Oberfläche, auf die der Trockenschmierstoff aufgebracht werden soll vorzubehandeln, um die Korrosionseigenschaften zu verbessern. Zur Verbesserung der Hafteigenschaften des Trockenschmierstoffs auf dem Bauteil bzw. auf der Unterlage wird im Stande der Technik eine Zink- oder Manganphosphatschicht als Unterlage verwendet, die eine Erhöhung der Oberflächenrauheit bewirkt.

In allen bekannten Fällen sind jedoch sowohl die Hafteigenschaften als auch die Korrosionseigenschaften bekannter Systeme nicht zufriedenstellend. Insbesondere für Schrauben besteht im Stande der Technik das Problem eines nicht reproduzierbaren Gleitverhaltens. Dieses Problem ist besonders gravierend im Bereich der Rad-Schrauben für Kraftfahrzeuge. Aufgrund der nicht eindeutig definierten Gleiteigenschaften lassen sich aus dem gewählten Drehmoment keine reproduzierbaren Einschraubeigenschaften herleiten.

Dabei ist ein in vorgegebenen Grenzen einzustellendes Verhältnis zwischen Anziehdrehmoment und Vorspannkraft erwünscht. Die Vorspannkraft liegt aber im Stande der Technik bei einem festgelegten Anziehdrehmoment der Verbindungselemente in einer gewissen Variationsbreite. Diese Variationsbreite wird durch Einsatz unterschiedlicher Werkstoffe (Leichtmetalllegierungen, vorzugsweise Aluminium- oder Magnesiumlegierungen oder Stahl) verschärft.

Ebenfalls problematisch ist die mechanische Belastung durch eine Mehrfachmontage sowie die in der Praxis auftretenden physikalischen Schlag und Temperatureinwirkungen.

Ein weiteres Problem, welches im Bereich der Kfz-Radschrauben besonders zum Tragen kommt, ist die Korrosion der Schraube, die insbesondere an ihren nicht am Gewinde anliegenden Flanken einem Angriff von Feuchtigkeit ausgesetzt ist.

Der Erfindung liegt somit das Problem zugrunde, ein Beschichtungssystem zur Beschichtung von Bauteilen mit Trockenschmierstoffen zu schaffen, daß erheblich verbesserte Haftungseigenschaften, eine erhöhte Korrosionsbeständigkeit und darüberhinaus eine hohe Chemikalienbeständigkeit aufweist.

Das Problem wird gelöst durch ein Beschichtungsystem, bei dem der Trokkenschmierstoff auf einer Zink/Nickel-Schicht aufgebracht ist, die zuvor mit einem Oxidationsmittel behandelt wurde. Alternativ kann der Trockenschmierstoff auch auf eine Konversionsschicht aufgetragen sein, die dann zwischen der oxidativ behandelten Zink/Nickel-Schicht und dem Trockenschmierstoff liegt. Als Konversionsschicht eignen sich organische oder anorganische Beschichtungsmittel wie z.B. Silicate oder Polymerwachse. Besonders geeignet ist das Produkt Aquares.

Mit dem erfindungsgemäßen Beschichtungssystem werden hervorragende, reproduzierbare Paarungseigenschaften mit unterschiedlichen Werkstoffen erreicht.

Ein besonderer Vorteil der Erfindung besteht darin, daß
die Kombination einer oxidativ behandelten Zink/Nickel-Schicht mit einem Trockenschmierstoff eine hohe Haltbarkeit gegenüber physikalischen und chemischen Einflüssen besitzt und dabei dennoch gute Fließeigenschaften aufweist. Auch bei mehrfacher Demontage und erneuter Montage - selbst in der Größenordnung von 20 Wiederholungen - bleibt das Verhältnis von Anziehdrehmoment und Vorspannkraft bei Verbindungselementen die erfindungsgemäß beschichtet sind unverändert. Die erreichte Vorspannkraft bleibt auch bei der Verwendung unterschiedlicher Materialien bei festgelegtem Anziehdrehmoment in engen Grenzen. Insbesondere die Haft- und Abriebbeständigkeit des erfindungsgemäßen Systems sowie die Schlagbeständigkeit ist gegenüber dem Stande der Technik erheblich verbessert.

Dies kann durch die Verwendung einer Konversionsschicht noch verstärkt werden. Hierbei wird als Trockenschmierstoff bevorzugt das anti-friction-coating Molykote D708 der Firma Molykote eingesetzt..Mit diesem System wird eine Temperaturbeständigkeit von -180 bis 200°C erreicht.

Mit Hilfe des Trockenschmierstoffs werden ferner die Unebenheiten im Gewinde der Bohrung ausgeglichen. Die optimierten Fließeigenschaften bewirken bei dem erfindungsgemäßen System ein Selbstversiegelung von Verletzungen der Außenhaut. Korrosionsbelastungen bei Fahrzeugen sind insbesondere im Fahrwerksbereich - dem Einsatzbereich von Radschrauben - erheblich. Mit dem erfindungsgemäßen System besteht selbst bei diesen außerordentlichen Belastungen ein hervorragender katholischer Korrosionsschutz sowie ein besonderer Widerstand gegen Kontaktkorrosion mit den unterschiedlichsten Werkstoffen (Leichtmetalllegierungen, insbesondere Aluminum- oder Magnesiumlegierungen oder Stahl). Dadurch ist auch unter erschwerten Einsatzbedingungen vermieden, daß eine Angriffsmöglichkeit für korrosive Stoffe oder sonstige die Beschichtung angreifende Chemikalien gegeben ist. Auch den besonderen chemischen Belastungen, wie sie beim Einsatz von aggressiven Reinigern beispielsweise zur Reinigung von Aluminiumfelgen eingesetzt werden hält das erfindungsgemäße System stand.

Ein besonderer Vorteil der Verwendung von oxidativ behandeltem Zink/Nickel-Schwarz mit dem erfindungsgemäßen Beschichtungssystem besteht darin, daß die bei herkömmlichen Systemen erforderlich Schwarzfärbung entfällt, die die optische Kontrolle des Beschichtungssystems erleichtert und die Deckbeschichtungsgänge reduziert werden.

Die Färbung des beschichteten Gegenstandes mit Hilfe des erfindungsgemäßen Beschichtungssystems bleibt auch nach längerem intensiven Gebrauch erhalten und weist kaum sichtbare Veränderungen auf, was insbesondere bei einem schwarzen Überzugssystem von Bedeutung ist.

Dies ist auch im Bereich der Beschichtung von Innenkonturen (vorzugsweise Vertiefungen oder Innen- Kraftangriffen) wie beispielsweise bei Schraubverbindungselementen von Bedeutung um den dekorativen und den Korrosionsschutzanforderungen zu genügen. Dies gilt bei Radschrauben vor allem für die Innenkontur des Schraubenkopfes.

Der Trockenschmierstoff wird bevorzugt im Tauchschleuderverfahren abgeschieden und anschließend eingebrannt.

Durch eine kolloidale Rußbindung wird eine Kontakkorrosion vermieden.

## Patentansprüche

1. Beschichtungssystem zur Schmierstoffbeschichtung von Bauteilen, **gekennzeichnet durch** eine galvanisch aufgebrachte oxidativ vorbehandelte Zink/Nickel-Schicht und eine Trockenschmierstoffschicht.

2. Beschichtungssystem nach Anspruch 1, **gekennzeichnet durch** eine Konversionsschicht zwischen der Zink/Nickel-Schicht und dem Trokkenschmierstoff.

3. Beschichtungssystem nach Anspruch 1 oder 2 **dadurch gekennzeichnet, daß** als Trockenschmierstoff das Produkt D708 der Firma Molykote verwendet wird.
